# EUROPEAN PATENT APPLICATION

(11) **EP 4 744 850 A1**
(43) Date of publication of application: **20.05.2026**
(21) Application number: 24212871.8
(22) Date of filing: 14.11.2024
(51) Int. Cl.: B27N 3/20, B27N 5/02, B27N 3/18, B27N 5/00, B29C 43/00, B29C 43/02, B31F 1/00

(54) **PRODUCT FORMING UNIT FOR DRY MANUFACTURING RIGID CELLULOSE PRODUCTS**

(71) Applicant: Yangi AB, 432 48 Varberg (SE)
(72) Inventor: LINDÉN, Frederik, 432 98 Grimeton (SE)
(74) Representative: Brann AB

(57) **Abstract**

The present invention relates to a product forming unit for dry manufacturing rigid cellulose products (2) having essentially non-flat general shape from a cellulose blank. The product forming unit comprising a moulding tool having a first mould part (17) and a second mould part (18), the product forming unit further comprising heating means for heating the cellulose blank to a forming temperature T, wherein at least one of the first mould part (17) and the second mould part (18) is displaceable in the axial direction in relation to the other in order to press the cellulose blank therebetween into final shape by applying a predetermined pressure P in the axial direction of the moulding tool, the first mould part (17) comprising a product press-surface and the second mould part (18) comprising a product press-surface arranged opposite the product press-surface of the first mould part (17) and together defining a press cavity of the moulding tool. The press cavity comprises a first sub-cavity (22') and a second sub-cavity (22"), wherein the moulding tool comprises a hinge position (23) dividing the first sub-cavity (22') and the second sub-cavity (22") from each other. The second mould part (18) comprises a snap press-surface (26) located adjacent the first rim press-surface (24) and located transversally outside the first rim press-surface (24) in relation to the hinge position (23), wherein the snap press-surface (26) is facing in the axial direction of the moulding tool and wherein an angle (α) between the first rim press-surface (24) and the snap press-surface (26) is equal to or less than 85 degrees and equal to or more than 60 degrees.

## Description

### Technical field of the Invention

The present invention relates in general to the field of method and apparatus for dry manufacturing of rigid cellulose products having essentially non-flat general shape from a cellulose blank. Such cellulose products may be used for packaging, storing, transporting and/or displaying other products such as electronics, tools, jewelry, food, dairy products, cosmetics, etc., and/or may be used as single/multiple use disposable articles, such as trays, cups, lids, plates, etc. The product forming unit is especially defined to provide rigid cellulose products having undercut features, and is configured to press the cellulose product in a single press motion. The term cellulose products mean products that mainly consists of the cellulose part of organic matter.

The present invention relates specifically to a product forming unit configured for dry manufacturing rigid cellulose products, the product forming unit comprising a moulding tool having a first mould part and a second mould part, the product forming unit further comprising heating means for heating the cellulose blank to a forming temperature T, wherein at least one of the first mould part and the second mould part is displaceable in the axial direction in relation to the other in order to press the cellulose blank therebetween into final shape by applying a forming pressure P in the axial direction of the moulding tool, the first mould part comprising a product press-surface and the second mould part comprising a product press-surface arranged opposite the product press-surface of the first mould part and together defining a press cavity of the moulding tool.

### Background of the Invention

There are many situations where it is desirable to provide two-dimensional (2D) or three-dimensional (3D) shaped objects made of sustainable materials, such as biomaterials, instead of using plastic/polymer materials. A biodegradable material commonly used for packaging and disposable articles is wet moulded pulp based on cellulose fibres. Such wet moulded pulp has the advantage of being considered as a sustainable material, since it is produced from biomaterials and can be recycled after use. Wet moulded pulp comprises more or less only water and separated cellulose fibers, and consequently, wet moulded pulp has been popular to use for primary packaging applications (packaging next to the article), for secondary packaging applications (assembly of such primary packages), as well as for manufacturing of disposable articles/products.

One advantage of using wet-forming techniques is that the moulding tool is usually made of a wire netting/cloth that is filled with a wet cellulose slurry and thereafter the cellulose slurry is dried and obtains the shape of the moulding tool. Thus, one may easily manufacture rigid cellulose products having so-called undercut features in the wall of the cellulose product, i.e. local sub-features having negative shape/draft angles. These sub-features are for instance intended for securing a lid on a cup/tray, for closing the lid of a clamshell tray/box, securing an article/object in a transport/display package, etc.

However, a common disadvantage with all wet-forming techniques is the need for large amounts of water during the preparations of the cellulose pulp and the need for drying during the manufacturing/moulding of the cellulose product, which is a time and energy consuming step leading to low production speed and substantial high investment cost in machines and tooling. Meaning that the wet-forming techniques are not feasible to replace fossil-based alternatives neither in small nor large scale production of rigid cellulose products. Thereto, the aesthetical and mechanical properties of a wet-moulded cellulose product are hard to control with desirable precision, due to un-uniform cellulose pulp and due to the wet moulding manufacturing technique *per se.*

Therefore many actors/companies, starting a few decades ago, have changed their focus and investments towards dry-forming techniques wherein rigid cellulose products are manufactured from separated cellulose fibres that are introduced into a product forming unit in the shape of a dry cellulose blank/web, wherein the cellulose blank is formed/moulded into the shape of the intended cellulose product and wherein the cellulose fibres are bonded to each other using heat and pressure, i.e. thermo-forming. The dry-forming techniques comprises different steps of generating an air-laid cellulose blank, that is transferred into a product forming unit and pressed.

The technical field of dry manufacturing rigid cellulose products having non-flat general shape, such as trays, lids, or the like, i.e. wherein the forming/pressing is performed in one pressing step/motion using a moulding tool having a first/female mould part and a second/male mould part configured to cooperate with each other, is well known. However, the technical field of dry manufacturing rigid cellulose products having non-flat general shape and undercut features, such as clamshell trays/boxes, hinged lids, and the like products having a snap locking, is still exposed to challenges.

WO 2023/110282 is directed towards the same technical field as the present invention and discloses a forming mould intended to generate undercut grooves in pressed cellulose products. The forming mould of WO 2023/110282 disclose that one of the mould parts, i.e. the male or the female mould part, comprises a first mould part section that is displaceable in the axial direction in relation to a base structure and comprises a second mould part section that is displaceable in the radial direction in response to said axial displacement of the first mould part section. It is described that the first mould part section due to the axial displacement thereof applies a predetermined forming pressure to the cellulose blank and that the second mould part section due to the radial displacement thereof applies the same predetermined forming pressure to the cellulose blank. However, said document clearly disclose that during the entire pressing/forming of the cellulose product the location of the first mould part section (top part) is floating/undefined in the axial direction in relation to the base structure. Thereby, there is no possibility to have control of the pressing force in the axial direction applied by the first mould part section or in the radial direction applied by the second mould part section, and it will be practically impossible to have the same predetermined pressure applied in the axial direction as well as in the radial direction. Thus, according to WO 2023/110282 the applied pressure in the axial direction by the first mould part section is totally dependent on the material characteristics and shape of the second mould part section. Thereto, the material characteristics/properties of the second mould part section will change over time due to deterioration. When not having total control of the applied press force, there is an immediate risk that the applied forming pressure in the radial and/or the axial direction will become too large, leading to an over-pressed cellulose product at some locations and under-pressed cellulose product at other locations. The material characteristics of the final cellulose product will then fluctuate along the product and the cellulose product will be miss-coloured at locations being exposed to over-pressure and also risk becoming brittle at those locations, and will suffer from fibre release at locations being exposed to under-pressure.

Thus, there is still a need in the art for a reliable, cheap and unharmful dry-forming technique/process for dry manufacturing rigid cellulose products having non-flat general shape and undercut features, such as clamshell trays/boxes, hinged lids, and the like.

### Object of the Invention

The present invention aims at obviating the aforementioned and other disadvantages and failings of previously known methods and apparatus for dry manufacturing rigid cellulose products, and at providing an improved apparatus for dry manufacturing rigid cellulose products having non-flat general shape and undercut features.

A primary object of the present invention is to provide an improved apparatus for dry forming/manufacturing rigid cellulose products having non-flat general shape and undercut feature, wherein the environmental benefits as well as time and energy saving benefits of conventional dry-forming techniques are maintained. It is another object of the present invention to provide an improved method and apparatus for dry forming/manufacturing rigid cellulose products having non-flat general shape and undercut feature, wherein the applied press force to the cellulose blank is accurate at all locations of the cellulose product. It is another object of the present invention to perform the forming/pressing of the rigid cellulose product having undercut feature in a single pressing operation/motion. It is another object of the present invention to provide an improved product forming unit and method for dry forming/ manufacturing rigid cellulose products having non-flat general shape, wherein the pressed cellulose products are protected from damage during the step of removal of the cellulose product from the moulding tool.

### Summary of the Invention

According to the invention at least the primary object is attained by means of the initially defined product forming unit having the features defined in the independent claim. Preferred embodiments of the present invention are further defined in the dependent claims.

According to the present invention, there is provided a product forming unit of the initially defined type, the press cavity comprising a first sub-cavity and a second sub-cavity, wherein the moulding tool comprises a hinge position dividing the first sub-cavity and the second sub-cavity from each other, the second mould part comprising a first rim press-surface located at a distal end of the first sub-cavity in relation to the hinge position, and a second rim press-surface located at a distal end of the second sub-cavity in relation to the hinge position, wherein the first rim press-surface is inclined in relation to the axial direction of the moulding tool and is facing in the axial direction of the moulding tool, and the second mould part comprises a snap press-surface located adjacent the first rim press-surface and located transversally outside the first rim press-surface in relation to the hinge position, wherein the snap press-surface is facing in the axial direction of the moulding tool and wherein an angle α between the first rim press-surface and the snap press-surface is equal to or less than 85 degrees and equal to or more than 60 degrees.

Thus, the present invention is based on the insight that it is of uttermost importance to have control of the press forces at all locations of the cellulose product when generating undercut features during the forming/pressing of the rigid cellulose product. The inventor has proposed a moulding tool having stiff and undivided mould halves, and still being able to press a cellulose product having undercut feature in a single press motion. The present invention is based on the idea to tilt the cellulose product in relation to the axial direction of the moulding tool, such that the undercut feature is accessible in the axial direction of the moulding tool.

The present invention provides the advantage that all surfaces of the rigid cellulose product are pressed using predetermined and optimal pressing force. The present invention provides the advantage that the forming/pressing is performed using a single pressing operation/motion, whereby obtaining a time and energy efficient forming of rigid cellulose products having undercut features. The present invention also provides the advantage that the ratio of successful removal of undamaged cellulose products will increase, since the undercut feature of the pressed cellulose product is not stuck in the moulding tool after the pressing.

According to various example embodiments of the present invention, the first rim press-surface of the second mould part is inclined by an angle β in relation to the axial direction of the moulding tool, wherein said angle β is equal to or more than 50 degrees and equal to or less than 70 degrees. Thereby, it is secured that the predetermined and optimal forming pressure is used at the location of the undercut feature.

According to various example embodiments of the present invention, the moulding tool comprises a hinge arrangement located at the hinge position, in order to generate a fold line of the cellulose product. A distinct fold line in the pressed cellulose product secures correct operation/location of the snap member when the cellulose product is closed/locked.

Further advantages with and features of the invention will be apparent from the following detailed description of preferred embodiments.

### Brief description of the drawings

A more complete understanding of the abovementioned and other features and advantages of the present invention will be apparent from the following detailed description of preferred embodiments in conjunction with the appended drawings, wherein:
- Fig. 1: is a schematic illustration of a production line or apparatus for dry manufacturing rigid cellulose products,
- Fig. 2: is a schematic illustration of a moulding tool according to a first embodiment, wherein a cellulose blank is provided into the moulding tool between the first/female mould part and the second/male mould part,
- Fig. 3: is a schematic illustration of the moulding tool according to figure 2, wherein the male mould part and the female mould part are in the press position,
- Fig. 4: is a schematic illustration of the moulding tool according to figures 2-3 after the forming/pressing step and the pressed cellulose product is removed from the moulding tool,
- Fig. 5: is a schematic illustration of the pressed cellulose product in cross-section according to figure 4, i.e. a clamshell tray/box, wherein the scrap area is removed from the final cellulose product,
- Fig. 6: is a schematic illustration of the pressed cellulose product according to figure 5, i.e. a clamshell tray/box, in an open state from the side,
- Fig. 7: is a schematic illustration of the pressed cellulose product according to figure 6, in a closed state from the side,
- Fig. 8: is a schematic illustration of the pressed cellulose product according to figures 6-7, i.e. a clamshell tray/box, in an open state from above,
- Fig. 9: is a schematic illustration of the pressed cellulose product according to figure 6-8, in a closed state from above,
- Fig. 10: is a schematic illustration of a moulding tool according to a second embodiment, wherein a cellulose blank is provided into the moulding tool between the first/female mould part and the second/male mould part,
- Fig. 11: is a schematic illustration of the moulding tool according to figure 10, wherein the male mould part and the female mould part are in the press position,
- Fig. 12: is a schematic illustration of the pressed cellulose product according to figure 11, i.e. a clamp, in an open state from the side,
- Fig. 13: is a schematic illustration of the pressed cellulose product according to figure 12, in a closed state from the side,
- Fig. 14: is a schematic illustration of the pressed cellulose product according to figures 11-12, in a closed state in a perspective view, and
- Fig. 15: is a schematic illustration of an apparatus for dry manufacturing rigid cellulose products, wherein the in-feed device provides the next cellulose blank into the moulding tool at the same time as the out-feed device removes the pressed cellulose product from the moulding tool.

### Detailed description of preferred embodiments of the invention

As used herein, the term "air/dry moulding/forming or air/dry laying/laid" means a well-known method according to which separated cellulose fibres are formed into a cellulose blank/sheet.

In air-laying technique, small/short fibres having a normal length in the range of 0,5 to 70 mm, for instance 1 to 10 mm, are separated and captured by an air stream/flow, and then laid on/applied to a forming mesh/surface, usually using a low pressure at the other side of the mesh/surface. The general terms "air/dry laying" and "air/dry moulding" are used interchangeably herein. The cellulose fibre carrying air flow may be generated by suitable device located upstream and/or downstream the forming mesh/surface.

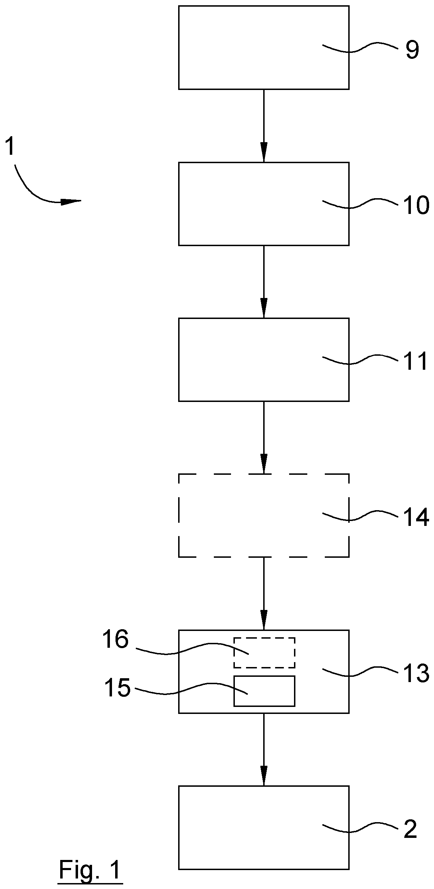

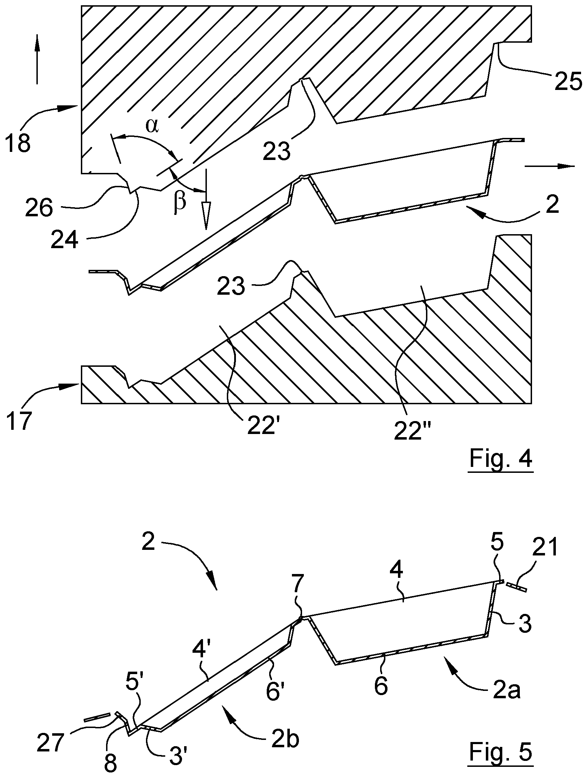

Reference is initially made to figures 1 and 5, wherein figure 1 disclose a schematic illustration of a generic production line/apparatus for dry manufacturing rigid cellulose products, wherein said apparatus is generally designated 1. The production line 1 is configured for manufacturing rigid cellulose products, generally designated 2, having essentially non-flat general shape from separated cellulose fibres. Such a production line 1 may be arranged and set-up according to different well-known ways. Figure 5 disclose an example of a rigid cellulose product 2, i.e. a clamshell tray. The apparatus 1 may have automatic transfer/handling between the different process steps, and/or may have manual transfer/handling between the different process steps, and thereto the apparatus 1 may have intermediate storing and/or additional process steps between the disclosed process steps, and/or the process steps may be located at different sites.

Figure 5 disclose a first example embodiment of a rigid cellulose product 2 in the shape of a clamshell tray/box, wherein the tray is formed using the inventive method. The cellulose product/tray 2 comprises a first part 2a configured as a container and a second part 2b configured as a lid, wherein the lid and container are connected to each other and comprises a snap locking. According to the disclosed embodiment, the container part 2a of the cellulose product 2 comprises an inclined circumferential wall 3 and an opening 4 defined by a circumferential rim/brim 5 connected to the upper/free end of the wall 3. The brim 5 may have an angled shape having an essentially radially extending upper surface and a turned-down outer edge, however it shall be pointed out that the cross-section of the brim 5 may have other shapes. The container part 2a may have truncated cone shape having straight wall 3, narrowing in the direction away from the opening 4, in accordance with figure 5 embodiment. The container part 2a may for instance have curved-shaped wall 3 seen in the axial plane. By having inclined walls 3 multiple cellulose products 2 are stackable one inside the other when they are empty. The container part 2a may also be a mug/cup, a lid holding base body, packaging or the like product. The cross section of the circumferential wall 3 in the radial plane may have any suitable shape, circular, oval, rectangular, polygonal, etc., and may differ in shape and/or dimension along the axial extension of the container part 2a. The container part 2a comprises a bottom 6, wherein the bottom 6 is entirely flat or the bottom may comprise local ribs, projections, etc., for strength and rigidity of the cellulose product. The bottom 6 may be located at the very lower end of the wall 3, according to figure 5 embodiment, and/or be partly located at an axial distance from the lower end of the wall 3, or a combination thereof. The circumferential wall 3 is connected to and extends in the axial direction upwards from the bottom portion 6. The general shape of the container part 2a is also applicable for a plate, cup, etc.

According to one example embodiment (not disclosed) the container part 2a is constituted by a lid holding base body, wherein the bottom 6 is configured to be connected/glued to a beverage carton and wherein the bottom 6 comprises a big hole that is overlapping an opening in the top of the beverage carton.

According to the disclosed first embodiment, the lid part 2b of the cellulose product 2 comprises an inclined circumferential wall 3' and an opening 4' defined by a circumferential rim/brim 5' connected to the upper/free end of the wall 3'. The lid part 2b may have truncated cone shape having straight wall 3', narrowing in the direction away from the opening 4', in accordance with figure 5 embodiment. The lid part 2b may for instance have curved-shaped wall 3' seen in the axial plane. By having inclined walls 3' multiple cellulose products 2 are stackable one inside the other when they are empty. The cross section of the circumferential wall 3' in the radial plane may have any suitable shape, circular, oval, rectangular, polygonal, etc., and may differ in shape and/or dimension along the axial extension of the lid part 2b. The container lid part 2b comprises a bottom 6', wherein the bottom 6' is entirely flat or the bottom may comprise local ribs, projections, etc., for strength and rigidity of the cellulose product. The bottom 6' may be located at the very lower end of the wall 3', according to figure 5 embodiment, and/or be partly located at an axial distance from the lower end of the wall 3', or a combination thereof. The circumferential wall 3' is connected to and extends in the axial direction upwards from the bottom portion 6'. According to alternative embodiments, the lid part 2b lacks a circumferential wall 3', i.e. the lid part 2b is essentially flat and the bottom 6' is connected to the brim 5'.

The cellulose product 2 comprises a hinge or fold line 7, dividing/connecting the container part 2a and the lid part 2a, wherein the lid part 2b may be placed on top of the container part 2a. The hinge or fold line 7 may be pressed and/or partly cut/perforated. The cellulose product 2 further comprises a snap member 8, connected to the rim 5' of the lid part 2b or connected to the rim 5 of the container part 2a. According to the disclosed embodiment, the snap member 8 is connected to the rim 5' of the lid part 2b, wherein the snap member 8 is configured to cooperate with the rim 5 of the container part 2a, when the clamshell tray/box 2 is closed. According to the alternative embodiment (not disclosed), the snap member 8 is connected to the rim 5 of the container part 2a, wherein the snap member 8 is configured to cooperate with the rim 5' of the lid part 2b, when the clamshell tray/box 2 is closed. Thus, the undercut feature of the present invention is constituted by the snap member 8 together with the adjacent rim. The rim 5' of the lid part 2b is configured to abut the rim 5 of the container part 2a when the clamshell tray/box 2 is closed.

Cellulose raw material 9, i.e. comprising mainly the cellulose part of organic matter, is provided to the production line, and is fed to a separating/disintegrating unit 10 in order to obtain individualized/separated cellulose fibres. The separated cellulose fibres are thereafter transported by an air stream/flow to a dispenser of a cellulose blank/sheet forming unit 11. The cellulose fibres are laid by the dispenser on a moving or stationary perforated surface of the cellulose blank forming unit 11. The cellulose fibre carrying air flow may be generated by suitable device located upstream and/or downstream the perforated surface. Thereafter the generated cellulose blank, generally designated 12, is transported/transferred to a product forming unit 13, whereby rigid cellulose products 2 are formed and discharged from the product forming unit 13.

The cellulose blank forming unit 11 may be configured to generate a continuous cellulose blank/web 12 and/or discontinuous/discrete cellulose blanks 12. Discontinuous/discrete cellulose blanks 12 are fed into the product forming unit 13.

The cellulose raw material 9 may be in the form of reeled pulp or paper, bale of cellulose pulp, paper, etc. and/or sheets of paper, cellulose pulp, etc. In case said cellulose raw material is in the form of sheets and/or reeled pulp, it can be fed directly into the separating unit 10. However, in case said cellulose raw material 9 is in the form of a bale or compact stacks of sheets, etc. one or more shredders and/or one or more additional separating/disintegrating units 10 may be necessary to be used for separating and dosing said cellulose raw material 9 from said bale or sheets in smaller quantities. The shredder(s) prepare cellulose raw material 9 to be accepted by said separating unit 10. The separating unit 8 disintegrates the cellulose raw material 7 into separated cellulose fibres. Said one or plurality of shredder(s) are arranged before said one or a plurality of separating unit(s) 10, so that an output of one of said shredder is connected to an input of one of said separating units 10. The shredders may be arranged in parallel to each other or in series with each other, and the disintegrating units 10 may be arranged in parallel to each other or in series with each other. The shredders and the disintegrating units 10 together constitute a cellulose fibre separating unit, arranged upstream the cellulose blank forming unit 11.

Said cellulose raw material 9 may be constituted by virgin cellulose fibres and/or recycled cellulose fibres and may originate from wood pulps such as kraft pulp, sulphite pulp, mechanical pulp, thermomechanical pulp (TMP), chemical treated mechanical pulp, chemi-thermomechanical pulp (CTMP), and/or from non-wood pulps such as bagasse, bamboo, abaca, hemp, flax, cotton.

The separating unit 10 may according to various embodiments be constituted by a hammer mill. In said separating unit 10 the cellulose raw material 9 is separated into fibres having a normal length in the range of 0,5-70 mm, preferably less than 10 mm. The length of said fibres may be customized by adjusting the internal properties of the separating unit 10 and/or by choosing a different separating unit 10 and/or choosing different cellulose raw material. The fibre length for wood pulp is according to various embodiments in the range 0,5-4 mm, preferably in the range 1,7-3,6 mm. According to various embodiments the fibre length for non-wood pulp is in the range 0,5-70 mm.

The production line 1 may comprise a pre-compression and/or imprinting unit 14, located downstream the cellulose blank forming unit 11 and upstream the product forming unit 13. In the pre-compression and/or imprinting unit 14, an air-laid fluffy cellulose blank 12 having a first thickness may be compressed into a cellulose blank 12 having a second thickness, wherein said second thickness is thinner than said first thickness, and/or may be provided with an imprinting pattern. During the pre-compression/imprinting the cellulose blank is made more coherent and easier to handle, since the pre-compression/imprinting generates internal bindings between individual cellulose fibres preventing mutual separation of the cellulose fibres.

The product forming unit 13 comprises a press unit 15, and may optionally comprise a preheating unit 16 arranged upstream the press unit 15. According to various example embodiments said cellulose blank 12 may be heated to an elevated temperature before being fed into the press unit 15 of the product forming unit 13. In such embodiment(s) where the cellulose blank 12 is preheated before being fed into the press unit 15, said press unit 15 may or may not comprise heating. According to various example embodiment said press unit 15 may be a heated press unit 15 for heating said cellulose blank 12 during pressing. In the case of a heated press unit 15, preheating of said cellulose blank 12 using a pre-heating unit 16 is optional. According to various example embodiments preheating of the cellulose blank 12 in said pre-heating unit 16 may be combined with a heated press unit 15. Having a pre-heating unit 16 in combination with a heated press unit 15 will speed up the manufacturing process in the product forming unit 13, and improve the quality/rigidity of the final rigid cellulose product 2. In the product forming unit 13 the cellulose blank 12 is heated to a forming temperature T in the range 120 - 200 °C in order to obtain adequate rigidity and strength in the final cellulose product 2, preferably in the range 150-180 °C.

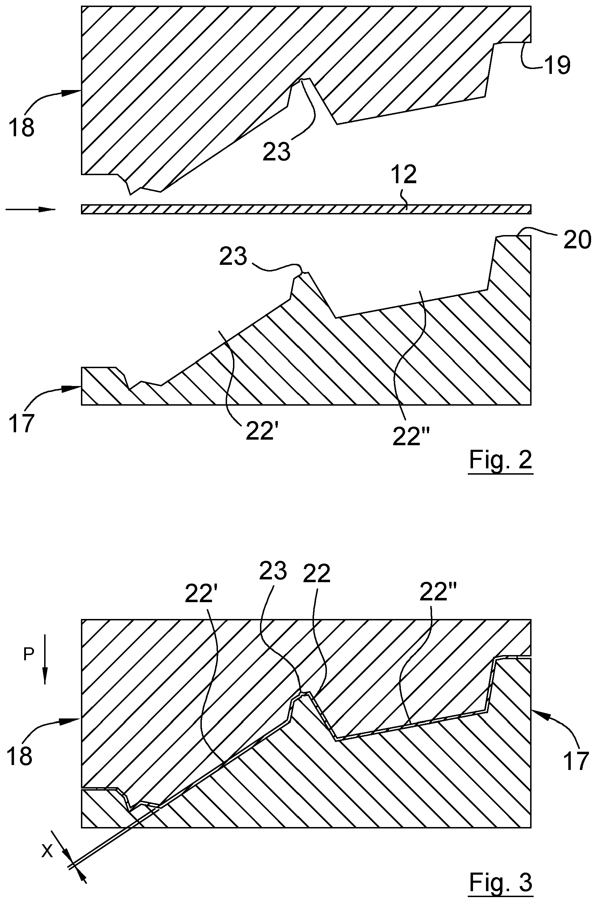

Reference is now made to figures 2-4 disclosing a first schematic embodiment of the product forming unit 13. The press unit 15 comprises a moulding tool having a first mould part 17 and a second mould part 18 having co-operating designs, wherein at least one of the first mould part 17 and the second mould part 18 is/are displaceable in the axial direction in relation to each other, i.e. reciprocating back and forth in relation to each other, in order to exert pressure to the cellulose blank 12 loaded therebetween. In the figures the mutual displacement is disclosed as being vertical, however the mutual displacement may be horizontal or any other suitable angle. The cellulose blank 12 loaded into the moulding tool, is constituted by the air-laid cellulose blank 12. The air-laid cellulose blank 12 may be generated upstream the product forming unit 13 in the same apparatus/production line and provided/transferred to the product forming unit 13, or may be generated at a separate location and provided/transferred to the product forming unit 13 via intermediate handling and storage.

According to various embodiments the first mould part 17 of the moulding tool is a female mould part, i.e. having a main recess for receiving a major part of the cellulose blank 12, and the second mould part 18 of the moulding tool is a male mould part, i.e. having a main protrusion for cooperation with said recess of the female mould part by being inserted therein, such that the cellulose blank 12 is pressed into a final rigid non-flat shape by applying a predetermined forming pressure P in the axial direction of the moulding tool. According to the disclosed embodiments the male mould part 18 is located above the female mould part 17, i.e. the pressed cellulose product 2 is intended to be collected from the lower female mould part 17 after the pressing of the cellulose blank 12. However, according to an alternative to the disclosed embodiments the female mould part 17 may be located above the male mould part 18, i.e. the pressed cellulose product 2 is intended to be collected from the male mould part 18 after the pressing of the cellulose blank 12. Thus, it is preferred that the pressed cellulose product 2 is intended to remain in/on the lower mould part after the pressing of the cellulose product 2. When the moulding tool has horizontal pressing direction, the pressed cellulose product 2 may be automatically removed/ejected from the moulding tool when the moulding tool is opened after the pressing of the cellulose blank 12.

The male/second mould part 18 comprises a product press-surface and a scrap press-surface 19 adjacent said product press-surface. According to various embodiments, the scrap press-surface 19 of the second mould part 18 surrounds the entire product press-surface. According to other embodiments, the scrap press-surface 19 of the second mould part 18 is only located at some locations around the product press-surface. The female/first mould part 17 comprises a product press-surface and a scrap press-surface 20 adjacent said product press-surface. According to various embodiments, the scrap press-surface 20 of the first mould part 17 surrounds the entire product press-surface. According to other embodiments, the scrap press-surface 20 of the first mould part 17 is only located at some locations around the product press-surface. The product press-surface of the first mould part 17 and the product press-surface of the second mould part 18 are arranged opposite each other, and the scrap press-surface 20 of the first mould part 17 is arranged opposite the scrap press-surface 19 of the second mould part 18. According to alternative embodiments, the moulding tool does not comprise scrap press-surfaces, i.e. the moulding tool comprises only product press-surfaces and is configured to press/form a cellulose product in its final shape without need for trimming off scrap material.

The cellulose blank 12 is pressed between the surfaces of the male/second mould part 18 and the surfaces of the female/first mould part 17 into final shape. The mutual distance, taken perpendicular to the surface in question, between the product press-surface of the first mould part 17 and the product press-surface of the second mould part 18 during the pressing of the cellulose blank 12 into a cellulose product 2 is X millimetres, wherein X preferably is in the range 0,2-3,0 millimetres, i.e. equal to the thickness of the pressed cellulose product 2. Preferably, X is in the range 0,25-1,5 millimetres. All surfaces of the moulding tool are facing in the axial direction in order to obtain a release angle for the cellulose product 2, and in order to obtain adequate press force to all parts of the cellulose product 2.

At a scrap area of the moulding tool, the mutual distance between the scrap press-surface of the first mould part 17 and the scrap press-surface of the second mould part 18 is equal to or more than the mutual distance between the product press-surface of the first mould part 17 and the product press-surface of the second mould part 18. The part of the cellulose blank 12 located at the scrap area may be left entirely uncompressed in the moulding tool, be partially compressed by applying a predetermined partial pressure less than said predetermined forming pressure P, or be fully compressed by applying said predetermined forming pressure P. Thus, radially outside the final rigid cellulose product 2, the cellulose blank 12 comprises a scrap area intended to be cut off. In figure 4 the cellulose product 2 is released and schematically removed from the moulding tool by opening the moulding tool. Figure 5 disclose a schematic illustration of the clamshell tray/box 2 wherein the scrap 21 is cut off from the cellulose product 2. According to various embodiments, the scrap 21 may be removed in a separate step in the moulding tool, in a subsequent step outside the moulding tool after the pressing of the cellulose product 2, or in a step concurrent with the pressing of the cellulose product 2.

The product press-surface of the first mould part 17 and the product press-surface of the second mould part 18 together define a press cavity 22 of the moulding tool during the pressing of the cellulose blank 12 into a cellulose product 2, i.e. the final cellulose product 2 is pressed in the press cavity 22 and is provided with the shape of the press cavity 22. The press cavity 22 of the moulding tool comprises a first sub-cavity 22' and a second sub-cavity 22", wherein the moulding tool comprises a hinge position 23 dividing the first sub-cavity 22' and the second sub-cavity 22" from each other. It shall be pointed out that the hinge position 23 may also be considered to connect the first sub-cavity 22' and the second sub-cavity 22" to each other.

According to various embodiments. Before any items/food is placed in the container part 2a of the rigid cellulose product 2 or before the cellulose product is used, for instance when the inside of the cellulose product 2 is exposed to moist/grease during use, the rigid cellulose product 2 may be provided with a liner film adhered to at least to the circumferential rim/brim 5, and preferably also to the wall 3 and/or the bottom 6 of the container part 2a. A liner film may also be adhered to the lid part 2b of the cellulose product 2. The liner film may be constituted by a multilayer film comprising polymer and/or metal. The adhesion of the liner film to the cellulose product is preferably heat activated.

According to various embodiments, the cellulose blank 12 may comprise barrier additives and/or material property enhancing additives, etc., such that the rigid cellulose tray 2 withstand grease, fat, water, vapour, etc. The additives are preferably provided to the cellulose fibers upstream the disintegrating unit 10 or between the disintegrating unit 10 and the product forming unit 13.

The predetermined forming pressure P is in the range 40-10000N/cm², preferably in the range 100-4000N/cm². According to various embodiments said predetermined pressures are above 500 N/cm², and according to various embodiments said predetermined pressures are below 2500 N/ cm². The holding time during the pressing step is in equal to or more than 0,5 seconds and equal to or less than 10 seconds, preferably less than 5 seconds, and most preferably less than 3 seconds.

According to various embodiments, the moisture content of the cellulose blank 10 provided into the moulding tool is in the range 5-20 wt%, preferably in the range 6-13 wt%. A too low moisture content entails that the internal bonding in the thermoformed/pressed cellulose product 2 are not strong enough and the risk of blistering/delamination of the cellulose product 2 during opening of the moulding tool is increased, and the risk for cracks is increased. A too high moisture content entails that the amount of water that is heated is increased and the risk of steam explosion/ expansion during opening of the moulding tool is increased.

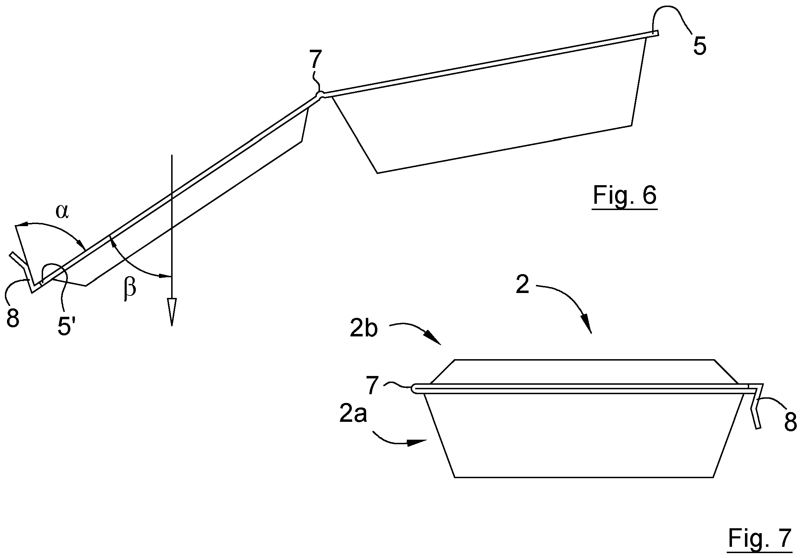

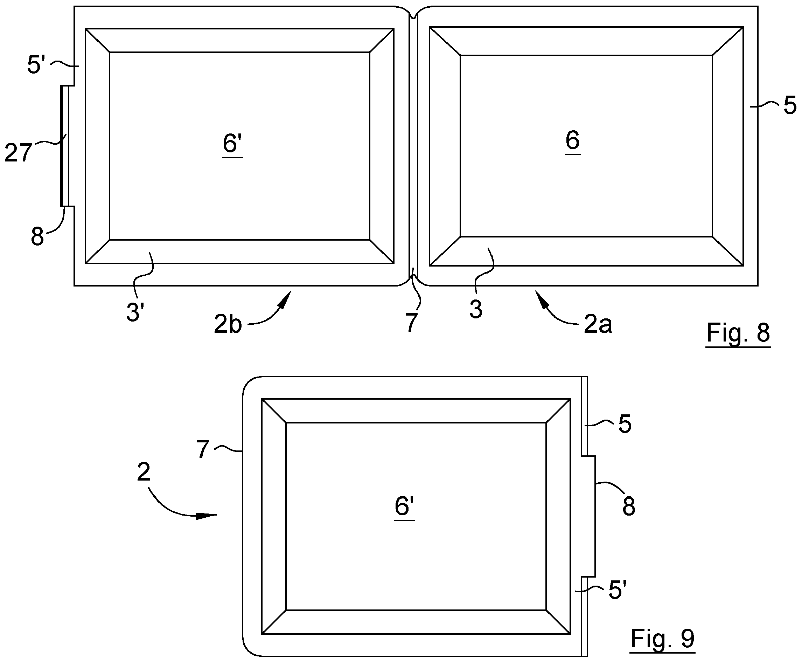

Reference is now also made to figures 6-9, disclosing a pressed cellulose clamshell tray/box 2 from the side and from above, in open and closed configuration, respectively.

According to the invention, the second mould part 18 comprises a first rim press-surface 24 located at a distal end of the first sub-cavity 22' in relation to the hinge position 23, and a second rim press-surface 25 located at a distal end of the second sub-cavity 22" in relation to the hinge position 23, wherein the first rim press-surface 24 is inclined in relation to the axial direction of the moulding tool and is facing in the axial direction of the moulding tool. According to the disclosed embodiment, the second rim press-surface 25 of the second mould part 18 is also inclined in relation to the axial direction of the moulding tool, i.e. the second sub-cavity 22" is inclined in relation to the axial direction of the moulding tool. However, the second rim press-surface 25 and the second sub-cavity 22" may be perpendicular in relation to the axial direction of the moulding tool. According to various embodiments the entire product press-surface of the second mould part 18 is facing in the axial direction of the moulding tool, i.e. in the same axial direction.

According to the invention, the second mould part 18 further comprises a snap press-surface 26 located adjacent the first rim press-surface 24 and located transversally outside the first rim press-surface 24 in relation to the hinge position 23, wherein the snap press-surface 26 is facing in the axial direction of the moulding tool and wherein an angle α between the first rim press-surface 24 and the snap press-surface 26 is equal to or less than 85 degrees and equal to or more than 60 degrees. Said angle α is also disclosed in figure 6 for elucidating purpose, since the angle of the moulding tool will be transferred to the pressed cellulose product 2 and in figure 6 the pressed cellulose product 2 is depicted having the same orientation as the press-cavity 22 of the moulding tool.

It shall be pointed out that the snap press-surface 26 does not need to be straight as schematically disclosed in the figures, but may for instance be at least partly convex inwardly. In the latter case, the tangents of the snap press-surface 26 is within said range of the angle α, and the angle α of the tangents increase when moving away from the first rim press-surface 24.

According to the disclosed embodiment, the cellulose clamshell tray/box 2 comprises an outer flange 27 connected to the snap member 8, wherein the outer flange 27 is inclined outwards in relation to the snap member 8 in order to facilitate closing and opening of the clamshell tray/box 2.

According to various embodiments of the present invention, the first rim press-surface 24 of the second mould part 18 is inclined by an angle β in relation to the axial direction of the moulding tool, wherein said angle β is equal to or more than 50 degrees and equal to or less than 70 degrees. Said angle β is also disclosed in figure 6 for elucidating purpose, since the angle of the moulding tool will be transferred to the pressed cellulose product 2 and in figure 6 the pressed cellulose product 2 is depicted having the same orientation as the press-cavity 22 of the moulding tool. A too big angle β, entails that the snapping function of the snap member 8 will become too small. A too small angle β, entails that there is a risk that other surfaces of the first sub-cavity obtain unfavourable angle in relation to the axial direction of the moulding tool. When the lid part 2b is more or less flat, i.e. lacks the walls 3', then the angle β may be smaller than 50 degrees, preferably in the range 30-40 degrees.

According to various embodiments of the present invention, the moulding tool comprises a hinge arrangement located at the hinge position 23, in order to generate the fold line 7 of the cellulose product 2. The hinge arrangement may for instance be constituted by a nip that is configured to generate a waist-shaped bridge between the container part 2a and the lid part 2a, or be constituted by press-surfaces having corresponding shape and configured to generate a small arcshaped bridge between the container part 2a and the lid part 2b, as seen in the disclosed embodiments.

According to various embodiments of the present invention, the product forming unit 13 comprises fold line generating means located downstream the moulding tool. The fold line generating means may for instance be constituted by cutting means that partly cut through the cellulose product 2 at the location of the hinge 7, or that perforate the cellulose product 2 at the location of the hinge 7, such that the folding of the lid part 2b at the fold line 7 is facilitated.

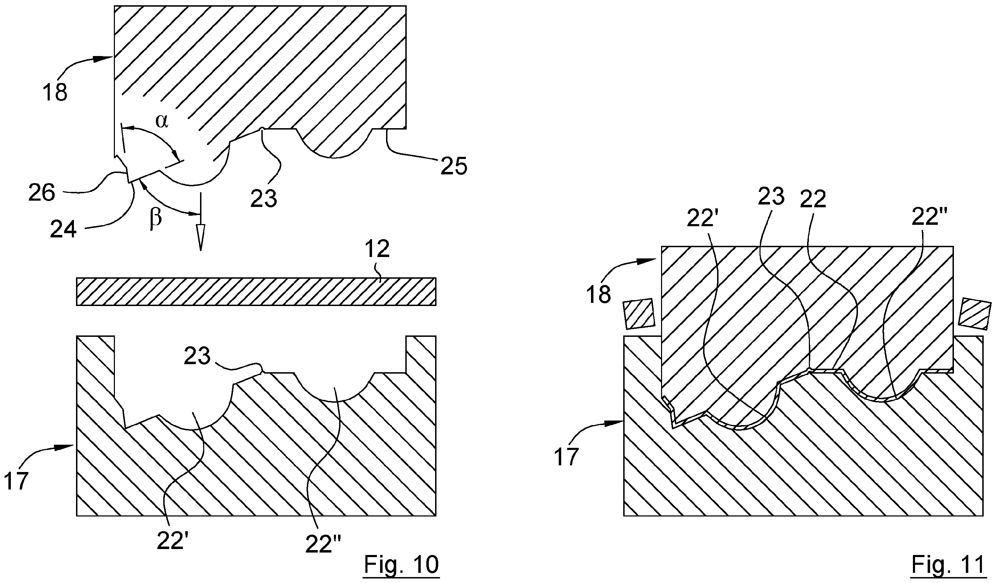

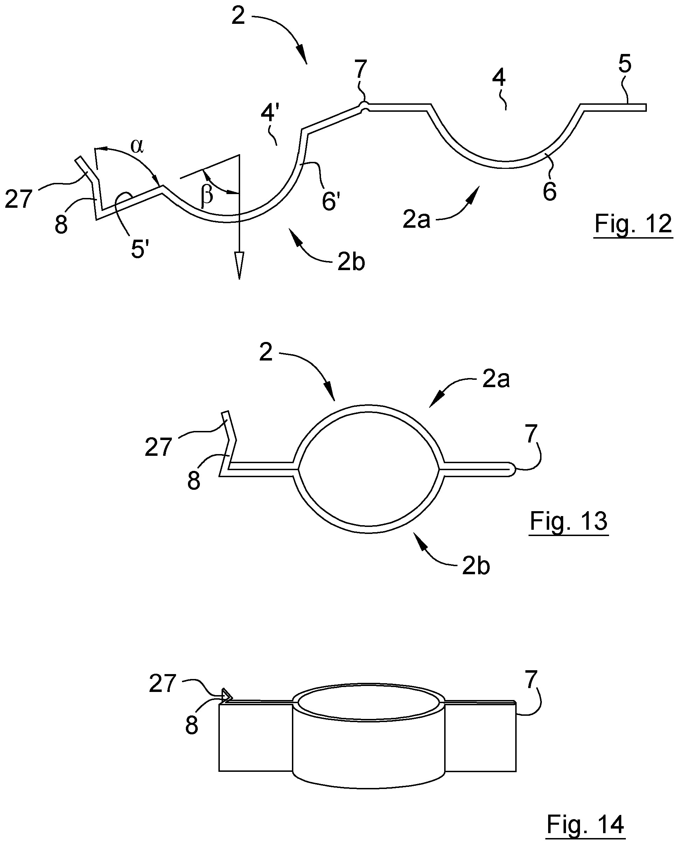

Reference is now made to figures 10-14, disclosing a pressed cellulose clamp 2 from the side in open and closed configuration, respectively, and in a perspective view. The disclosed clamp 2 is a travel protection for a pump bottle dispenser, i.e. the clamp is located around the stem of the pump such that the pump head cannot be pushed down by mistake during transportation.

Figures 10 and 11 disclose a second schematic embodiment of the product forming unit 13, and corresponds to figures 2 and 3. Everything referring to the product press-surfaces of the moulding tool, is the same for all embodiments covered by the present invention. The description hereinbelow refereeing to the second embodiment disclosed in figures 10-14, will mainly focus on differences between the second embodiment, figures 10-14, and the first embodiment, figures 2-9.

One main difference is that first mould part 17 and the second mould part 18, does not comprise any scrap press- surface. Thus, every part of the cellulose blank 12 that is captured between the first mould part 17 and the second mould part 18, when they are displaced in the axial direction in relation to each other will become pressed and converted into the pressed cellulose product 2. The outer parts of the cellulose blank 12 may be cut off when the second mould part 18 enters into the first mould part 17, i.e. before the pressing step. Thus, the cellulose blank 12 may be pre-cut into optimal shape, before the moulding tool or in the moulding tool.

According to the disclosed second embodiment of the rigid cellulose product 2, the clamp is formed using the inventive method. The cellulose clamp 2 comprises a first part 2a and a second part 2b. The first part 2a and the second part 2b are essentially alike except for the snap member 8 and the outer flange 27. The first part 2a comprises a bottom 6, an opening 4 and a brim 5, wherein the brim 5 is connected to the bottom portion 6. The bottom 6 may alternatively be considered a wall. According to alternative embodiments, the bottom 6 may for instance be V-shaped or shaped as one half of a hexagonal. The second part comprises a bottom 6', an opening 4' and a brim 5', wherein the brim 5' is connected to the bottom portion 6'. The bottom 6' may alternatively be considered a wall. According to alternative embodiments, the bottom 6' may for instance be V-shaped or shaped as one half of a hexagonal, or be entirely flat.

The cellulose clamp 2 comprises a hinge or fold line 7, dividing/connecting the first part 2a and the second part 2a. The hinge or fold line 7 may be pressed and/or partly cut/perforated. The cellulose product 2 further comprises a snap member 8, connected to the rim 5' of the second part 2b or connected to the rim 5 of the first part 2a. According to the disclosed embodiment, the snap member 8 is connected to the rim 5' of the second part 2b, wherein the snap member 8 is configured to cooperate with the rim 5 of the first part 2a, when the cellulose clamp 2 is closed. Thus, the undercut feature of the present invention is constituted by the snap member 8 together with the adjacent rim. The rim 5' of the second part 2b is configured to abut the rim 5 of the first part 2a when the cellulose clamp 2 is closed.

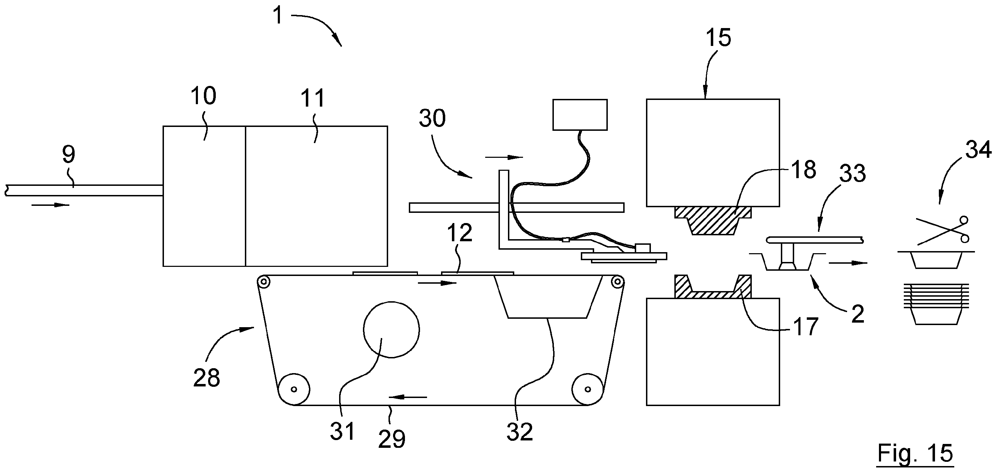

Reference is now made to figure 15 disclosing a schematic illustration of the apparatus 1 for dry manufacturing rigid cellulose products 2, the apparatus 1 comprising an inventive product forming unit 13.

The apparatus 1 comprises a conveyor arrangement, generally designated 28. The conveyor arrangement 28 is configured to receive cellulose blanks 12 in a continuous stream from the cellulose blank forming unit 11, and transporting the continuous stream of cellulose blanks 12 in a transport direction towards the product forming unit 13. The separating/disintegrating unit 10 and the cellulose blank forming unit 11 are schematically disclosed, at the upstream end of the conveyor arrangement 28. According to alternative embodiments the cellulose blanks 12 are provided to the conveyer arrangement 28 from an intermediate storage, manually or automatically.

The conveyor arrangement 28 comprises an endless conveyor belt 29 that according to the disclosed embodiment is continuously moving during operation of the apparatus 1, and has a predetermined traveling speed in the transport direction of the conveyor arrangement 28. The traveling speed of the conveyor belt 28 is preferably adjustable, and is adjusted in consensus with the cycle rate of the product forming unit 13, and also in consensus with the cycle rate of the cellulose forming unit 11 when applicable. The traveling speed of the conveyor belt 29 is also dependent on the size of the cellulose blanks 12 in relation to the size of the mutual gap between the cellulose blanks 12. According to alternative embodiments, the conveyor belt 29 may be intermittently/stepwise moving, in order to receive cellulose blanks 12 and in order to transfer cellulose blanks towards the product forming unit 13.

The apparatus 1 further comprises an in-feed device, generally designated 30, configured for transferring the cellulose blank 12 from the conveyor arrangement 28 and loading the cellulose blank 12 into the moulding tool that is open and empty. The in-feed device 30 preferably comprises a suction device configured to engage and transfer the cellulose blank 12 from the continuously moving conveyor belt 29 into the open moulding tool. About the same time as the in-feed device 30 engages the cellulose blank 12, the preceding press cycle in the product forming unit 13 is finished and the moulding tool of the product forming unit 13 is opened.

In figure 15, the in-feed device 30 transfers the cellulose blank 12 into the moulding tool, and concurrently the pressed cellulose product 2 from the preceding press-cycle is removed from the moulding tool. The in-feed device 30 releases the cellulose blank 12 in the open moulding tool.

According to various embodiments, the cellulose blank 12 is retained on the continuously moving conveyor belt 29 by means of an air-removing arrangement 31, i.e. a fan, configured to pull the cellulose blank 12 towards the conveyor belt 29, i.e. by means of under-pressure condition. Thereby the orientation and location of the cellulose blank 12 is known and fixed, in relation to the moving conveyor belt 29. However, the air-removing arrangement 31 is not active or reduced at the position the in-feed device 30 engages the cellulose blank 12 and lifts the cellulose blank 12 from the conveyor belt 29 e.g. by means of a box/partition 32. This part of the conveyor belt 29 is also called pick-up zone.

The pressed cellulose product 2 is removed from the moulding tool by means of an out-feed device, generally designated 33. The out-feed device 33 is configured to remove the pressed cellulose product 2 from the moulding tool in order to make the moulding tool empty and ready for the loading of the next cellulose blank 10. Thus, part of the out-feed device 33 is insertable into the moulding tool between the male/second mould part 18 and the female/first mould part 17 after the pressing of the cellulose blank 12. Thus, the pressed cellulose product 2 is intended to be located in/on the first mould part 17 after the pressing of the cellulose blank 12, and after the moulding tool is opened. Thereto, the out-feed device 33 may be arranged to transfer the pressed cellulose product 2 to a subsequent step in the apparatus such as cutting/trimming station 34 and/or stacking station.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims and the equivalents thereof. Thus, the equipment may be modified in all kinds of ways within the scope of the appended claims. Any subject matter falling outside the scope of the claims is provided for information purposes, and for placing the invention into a relevant context.

It shall also be pointed out that all information about/concerning terms such as above, under, upper, lower, etc., shall be interpreted/read having the equipment oriented according to the figures, having the drawings oriented such that the references can be properly read. Thus, such terms only indicate mutual relations in the shown embodiments, which relations may be changed if the inventive equipment is provided with another structure/design.

Throughout this specification and the claims which follows, unless the context requires otherwise, the word "comprise", and variations such as "comprises" or "comprising", will be understood to imply the inclusion of a stated integer or steps or group of integers or steps but not the exclusion of any other integer or step or group of integers or steps.

## Claims

1. Product forming unit (13) configured for dry manufacturing rigid cellulose products (2) having essentially non-flat general shape from a cellulose blank (12), the product forming unit (13) comprising a moulding tool having a first mould part (17) and a second mould part (18), the product forming unit (13) further comprising heating means for heating the cellulose blank (12) to a forming temperature T, wherein at least one of the first mould part (17) and the second mould part (18) is displaceable in the axial direction in relation to the other in order to press the cellulose blank (12) therebetween into final shape by applying a forming pressure P in the axial direction of the moulding tool, the first mould part (17) comprising a product press-surface and the second mould part (18) comprising a product press-surface arranged opposite the product press-surface of the first mould part (17) and together defining a press cavity (22) of the moulding tool, **characterized in that**
- the press cavity (22) comprises a first sub-cavity (22') and a second sub-cavity (22"), wherein the moulding tool comprises a hinge position (23) dividing the first sub-cavity (22') and the second sub-cavity (22") from each other,
- the second mould part (18) comprises a first rim press-surface (24) located at a distal end of the first sub-cavity (22') in relation to the hinge position (23), and a second rim press-surface (25) located at a distal end of the second sub-cavity (22") in relation to the hinge position (23), wherein the first rim press-surface (24) is inclined in relation to the axial direction of the moulding tool and is facing in the axial direction of the moulding tool, and
- the second mould part (18) comprises a snap press-surface (26) located adjacent the first rim press-surface (24) and located transversally outside the first rim press-surface (24) in relation to the hinge position (23), wherein the snap press-surface (26) is facing in the axial direction of the moulding tool and wherein an angle (α) between the first rim press-surface (24) and the snap press-surface (26) is equal to or less than 85 degrees and equal to or more than 60 degrees.

2. The product forming unit (13) according to claim 1, wherein the entire product press-surface of the second mould part (18) is facing in the axial direction of the moulding tool.

3. The product forming unit (13) according to claim 1 or 2, wherein the first rim press-surface (24) of the second mould part (18) is inclined by an angle (β) in relation to the axial direction of the moulding tool, wherein said angle (β) is equal to or more than 50 degrees and equal to or less than 70 degrees.

4. The product forming unit (13) according to any preceding claim, wherein the moulding tool comprises a hinge arrangement located at the hinge position (23), in order to generate a fold line (7) of the cellulose product (2).

5. The product forming unit (13) according to any of claims 1-3, wherein the product forming unit (13) comprises fold line generating means located downstream the moulding tool.

6. The product forming unit (13) according to any preceding claim, wherein the forming pressure P is in the range 0,4-100 MPa, preferably in the range 5-25 MPa.

7. The product forming unit (13) according to any preceding claim, wherein the forming temperature T is in the range 120 - 200 °C, preferably in the range 150-180 °C.

8. The product forming unit (13) according to any preceding claim, wherein the moisture content of the cellulose blank (12) provided into the moulding tool is in the range 5-20 wt%, preferably in the range 6-13 wt%.
